# EUROPÄISCHE PATENTSCHRIFT

(11) **EP 3 062 035 B1**
(45) Veröffentlichungstag und Bekanntmachung des Hinweises auf die Patenterteilung: **15.02.2017**
(21) Anmeldenummer: 15156910.0
(22) Anmeldetag: 27.02.2015
(51) Int. Cl.: F24J 2/46, F24J 2/50

(54) **Solarkollektor**
Solar collector
Capteur solaire

(43) Veröffentlichungstag der Anmeldung: 31.08.2016
(73) Patentinhaber: GREENoneTEC, 9300 St. Veit/Glan (AT)
(72) Erfinder: Poscharnig, Harald, 9063 Maria Saal (AT); Koschier, Günter, 9314 Launsdorf (AT); Schöffmann, Martin, 9020 Klagenfurt (AT)
(74) Vertreter: Schweiger, Johannes

(56) Entgegenhaltungen:
- EP-A1- 2 437 002
- DE-A1- 10 216 625
- DE-A1- 19 954 238
- DE-A1-102006 061 284
- JP-A- H11 325 610
- JP-A- S58 198 644
- US-A- 4 003 363
- US-A- 4 231 204
- US-A- 4 242 386

## Beschreibung

Die Erfindung betrifft einen Solarkollektor, auch Solarthermie-Kollektor oder Sonnenkollektor genannt. Ein solcher Solarkollektor dient zur Umwandlung von Solarenergie in Wärme und insbesondere zur Erzeugung von Warmwasser für private, gewerbliche oder industrielle Zwecke.

Wesentlicher Bestandteil jedes Solarkollektors ist der "Absorber", der meist aus einem Absorberblech und einem Register besteht. Das Register besteht oft aus einem oder mehreren Registerrohren, beispielsweise mit Durchmessern von 6 bis 12 mm und zugehörigen Sammelleitungen, beispielsweise mit Durchmessern von 15 bis 40 mm. Die Leitungen können - je nach Kollektor-Bauart- auch größer oder kleiner sein.

Eine bekannte Register-Ausführung ist nach Art einer "Harfe" gestaltet, wobei zwischen zwei Sammelleitungen mehrere Registerrohre, parallel zueinander, verlaufen. Bei einer anderen Bauform verlaufen die an eine Sammelleitung angeschlossenen Registerrohre mäanderförmig.

Soweit nicht anders offenbart oder aus dem technischen Zusammenhang klar beziehen sich nachstehend alle Angaben auf einen fertigen Solarkollektor in einer Funktionsposition, insbesondere mit der transparenten oberen Seite der Sonne zugewandt.

Während Solarkollektoren für private Zwecke zur Unterstützung des Warmwasser- und Heizungswasserbedarfs im Temperaturbereich bis ca. 50°C meist einfach konstruiert sind, zum Beispiel nur eine einfache transparente Abdeckung (meist aus Glas) auf der der Sonne zugewandten Seite aufweisen, wird für industrielle/gewerbliche Zwecke, beispielsweise zur Unterstützung von Fernwärmenetzen, deutlich heißeres Warmwasser benötigt.

Entsprechend ist für diese Kollektoren eine bessere thermische Isolierung notwendig, um mögliche Wärmeverluste des Kollektors, insbesondere durch Konvektion, zu reduzieren.

Ein Solarkollektor, bestehend aus einem belüftbaren Gehäuse und einer strahlungsdurchlässigen vorderen Abdeckung ist aus der DE 199 54 238 A bekannt.

Eine bekannte Lösung schlägt vor, zwischen der transparenten Abdeckung und dem Absorberblech eine transparente Folie anzuordnen. Die Folie soll die Konvektion und damit den Wärmetransport zur Glasscheibe unterbrechen. Nachteilig bei dieser Lösung ist, dass die Folie gespannt sein muss, damit sie den Absorber nicht berührt. Es wurde auch beobachtet, dass die Folie reisst. Eine andere bekannte Bauform verwendet anstelle einer 1-Scheiben-Abdeckung eine 2-fach-Verglasung. Ein solcher Solarkollektor ist zum Beispiel aus der US 4 231 204 A bekannt.

Die 2-Scheiben-Verglasung kann als Isolierungsglas (Zwischenraum gefüllt mit einem Gas) oder mit Luft zwischen den beiden Glasscheiben ausgeführt werden. Der Einsatz von Isolierglas ist problematisch, da die Temperaturen im Kollektorgehäuse (im Kollektorraum) sehr hoch werden und technisch nicht mehr beherrscht werden können. Diese Lösung eignet sich also nicht für eine Massenproduktion mit einer Garantieleistung bis zu 10 Jahren.

Bei der Ausführungsform mit Luft zwischen den Glasscheiben ist folgendes zu beobachten: Die unterschiedlichen Temperaturen im Bereich der beiden Glasscheiben bewirken unterschiedliche Wärmeausdehnungen der beiden Glasscheiben, die Glasscheiben werden jedoch durch die gasdichte Verbindung zueinander daran gehindert, sich unterschiedlich auszudehnen. Die Spannungen können so groß werden, dass die Doppelscheibe zerstört wird.

Ein weiterer Nachteil ist, dass sich zwischen den Scheiben Feuchtigkeit (Kondensat) bilden kann. Aufgrund der sich ständig ändernden Temperaturen im Kollektorraum ändert sich auch der Druck im Raum zwischen den Scheiben. Zusätzlich muss auch dieser Kollektortyp andere Druck- und Zugkräfte aufnehmen, hervorgerufen durch Wind- und Schneelasten, die Werte bis 600kg/m² betragen können.

Aufgabe der Erfindung ist es, einen Solarkollektor vorzuschlagen, der die genannten Nachteile nicht aufweist. Der Wirkungsgrad bekannter Kollektoren soll optimiert werden. Der Kollektor soll insbesondere auch für industrielle/gewerbliche Zwecke eingesetzt werden, also für Hochleistungskollektoren, die Nutzwärme hoher Temperatur (zum Beispiel >80°C) bereitstellen.

Die Erfindung geht von einem Solarkollektor mit Doppelverglasung aus, bei der zwischen den Glasscheiben Luft ist (der Begriff Glas schließt sonstige, insbesondere transparente Materialien ein, die lichtdurchlässig sind).

Allerdings ist der zwischen den Scheiben gebildete Raum nicht hermetisch geschlossen; im Gegenteil: die Scheiben werden so konfektioniert (angeordnet), dass Luft gezielt durch den Scheibenzwischenraum strömen kann. Diese Zwangskonvektion ist gewünscht. Damit wird zwar der Wirkungsgrad des Kollektors gegenüber dem Optimum etwas geringer; gleichzeitig können aber die oben beschriebenen negativen Effekte bei geschlossenen Doppelverglasungen vermieden werden.

Außerdem wird eine strömungstechnische Verbindung für diese Luft nach außen geschaffen, so dass sich folgende Luftwege ergeben:
- die Luft kann von außen in den Kollektorraum und damit in den Scheibenzwischenraum strömen,
- die Luft kann durch den Raum zwischen den Scheiben strömen,
- die Luft kann aus dem Scheibenzwischenraum wieder austreten und anschließend den Kollektorinnenraum nach außen (in die Umgebungsluft) verlassen.

Um diese Durchströmbarkeit zu erreichen, sind vorzugsweise mindestens zwei Lüftungsöffnungen beziehungsweise Lüftungskanäle je Kollektor vorgesehen, so dass mindestens eine Belüftungsmöglichkeit und mindestens eine Entlüftungsmöglichkeit und damit eine gute Durchströmbarkeit des Raums zwischen den Glasscheiben besteht.

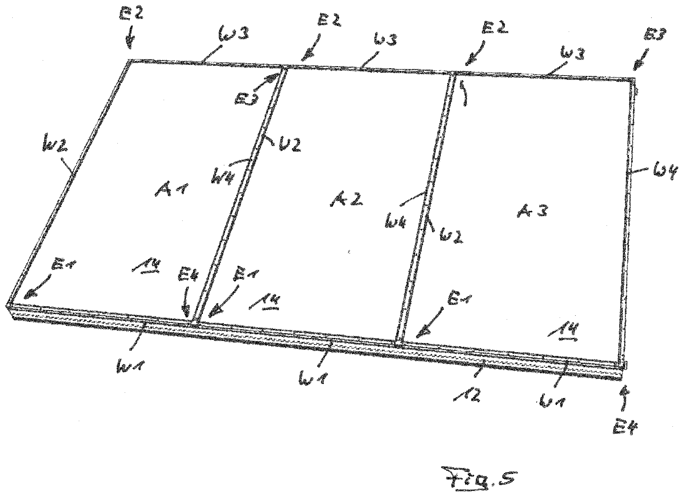

Die Öffnungen beziehungsweise Lüftungskanäle sollen dimensionsmäßig so sein, dass folgende Kriterien erfüllt werden:
- Es soll möglichst keine Feuchtigkeit von außen in den Kollektor-Innenraum gelangen. Insoweit weisen die Öffnungen/Lüftungskanäle einen relativ geringen Querschnitt auf. Daraus folgt weiters, dass die Öffnungen so angeordnet werden müssen, dass Umgebungsfeuchtigkeit, beispielsweise Regen, nicht eindringen kann. Dies gelingt am Einfachsten dadurch, dass die Luft in vertikaler Richtung von unten nach oben in den Kollektor angesaugt wird beziehungsweise auf umgekehrtem Weg den Kollektor wieder verlässt.
- Der Wärmeverlust durch Konvektion soll möglichst gering sein; andererseits wird eine Mindestkonvektion gewünscht, um eine Kondensatbildung zwischen den Scheiben zu vermeiden.
- Im Ergebnis muss für einen spezifischen Solarkollektor ein Kompromiss bei der Dimensionierung ermittelt werden.
- Für Solarkollektoren (bei Solarkollektoren mit mehreren Abschnitten, wie in Fig. 5 dargestellt, beziehen sich diese Angaben auf den einzelnen Abschnitt) mit B=0,5-1,5m, L=1,0-3,0m und T=0,05-0,25m, wobei B= Breite, L= Länge und T=Tiefe/Höhe des Kollektor ist, kann der Querschnitt der kleinsten Öffnung (des kleinsten Kanals) zum Beispiel wir folgt sein:
   - im Bereich 3 mm² bis 40mm²
   - mit alternativen Untergrenzen bei 5mm², 7mm², 8mm² oder 10mm²
   - mit alternativen Höchstwerten bei 35mm², 30mm², 25mm² oder 20mm².
- Die Öffnung zwischen dem Kollektor und Umgebungsatmosphäre (also die Stelle, an der Luft aus der Umgebung in den Kollektor gelangt oder die Stelle, an der die Luft aus dem Kollektor wieder in den Umgebung zurückgeleitet wird) kann am kleinsten sein und sollte sich an den vorstehend genannten Werten orientieren. Mit anderen Worten: Die Querschnitte der Lüftungsöffnungen in der Lüftungskappe sind entscheidend und bestimmen die Luftmenge, die durch den Kollektor strömt. Die Querschnitte der Öffnungen/Durchgänge und Strömungswege der Luft im Kollektor-Innenraum können auch deutlich größer sein.

Dieses Kollektordesign schafft eine Be- und Entlüftung des Scheibenzwischenraumes und verhindert wirkungsvoll einen Niederschlag von Feuchtigkeit im Kollektor.

Der oder die Lüftungskanäle weisen vorzugsweise ein- oder mehrere Umleitungen auf, verlaufen also zum Beispiel zickzackförmig oder mäanderförmig. Dies hat den Vorteil, dass Feuchtigkeit, die unbeabsichtigt eindringen sollte oder Feuchtigkeit, die im Lüftungskanal entsteht, wieder abgetrennt und entsorgt werden kann.

Analog wird auch eine Staubabscheidung erreicht, so dass der Kollektor auch in staubreicher Umgebung eingesetzt werden kann.

In ihrer allgemeinsten Ausführungsform betrifft die Erfindung einen Solarkollektor mit folgenden Merkmalen:
a) einem rechteckigen Boden,
b) einem am Rand des Bodens senkrecht vom Boden abstehenden, umlaufenden Rahmen mit vier Wandabschnitten und vier Eckbereichen,
c) einer äußeren rechteckigen Glasscheibe, die an einem dem Boden gegenüberliegenden oberen Ende des Rahmens am Rahmen befestigt ist,
d) einer inneren rechteckigen Glasscheibe, die mit Abstand zur äußeren Glasscheibe zwischen äußerer Glasscheibe und Boden am Rahmen befestigt ist, wobei
e) der Abstand zwischen innerer und äußerer Glasscheibe und damit ein Raum zwischen innerer und äußerer Glasscheibe durch Abstandsmitteln definiert ist, die die innere und äußere Glasscheibe in ihren Randbereichen verbinden,
f) einem Absorberblech, das mit Abstand zur inneren Glasscheibe zwischen innerer Glasscheibe und Boden angeordneten ist,
g) mindestens einem Registerrohr, das mit Abstand zum Boden zwischen Absorberblech und Boden angeordnet ist, wobei
h) Boden, Rahmen und äußere Glasscheibe einen quaderförmigen Kollektorraum begrenzen, und
i) Boden, äußere Glasscheibe, innere Glasscheibe, Absorberblech und Registerrohr im Wesentlichen parallel zueinander verlaufen, sowie
j) mindestens zwei, im Abstand zueinander angeordnete Lüftungskappen mit jeweils folgenden Merkmalen:
   j1) einem ersten Abschnitt, der mit einer Innenseite gegen eine Außenwand des Rahmens am oberen Ende des Rahmens anliegt, und
   j2) einem rechtwinklig zum ersten Abschnitt verlaufenden zweiten Abschnitt, der mit einer Innenseite eine endseitige obere Stirnfläche des Rahmens überdeckt, wobei
   i3) die Innenseiten der beiden Abschnitte jeweils eine solche Profilierung aufweisen, dass entlang der Innenseiten mindestens ein durchgehender Belüftungskanal gebildet wird, der von außen in den Kollektorraum führt und
   j4) der Belüftungskanal über mindestens eine Öffnung in den Abstandsmitteln in strömungstechnischer Verbindung mit dem Raum zwischen innerer und äußerer Glasscheibe steht.

Die genannten Konstruktionsmerkmale können in verschiedenen Ausführungen realisiert werden. Dazu gehören:
Zu a) und b): Der Kollektor kann als sogenannten Rahmenkollektor oder als sogenannter Wannenkollektor ausgeführt werden. Beim Rahmenkollektor bilden Boden und Rahmen getrennte Teile, meist sind es 4 Rahmenteile, die mit dem Boden verbunden werden. Beim Wannenkollektor sind Boden und Rahmen in der Regel einteilig und die Eckbereiche mehr abgerundet als beim Rahmenkollektor.
   Werden mehrere Kollektoren direkt nebeneinander angeordnet können benachbarte Kollektoren einen gemeinsamen (mittleren) Rahmenteil, also eine Art gemeinsamen Mittelsteg, aufweisen. Dieser mittlere Rahmenteil muss sich von einem normalen Rahmenteil nur dadurch unterscheiden, dass beidseitig Anschlusselemente für die Glasscheiben, Absorberblech, Registerrohre etc. vorhanden sind. Insoweit gelten die Konstruktionsmerkmale, die nachstehend für einen Eckbereich des Kollektors beschrieben werden, analog auch für die Gestaltung eines Mittelstegs zwischen zwei direkt miteinander verbundenen Solarkollektoren. Konstruktiv werden die Merkmale also quasi nur gespiegelt.
   Boden und Rahmen können aus Metall, beispielsweise aus Aluminium bestehen. Der Rahmen beziehungsweise die Rahmenteile können Stranggussteile sein. Sie können in Längsrichtung Hohlkammern aufweisen. Dazu gehört auch ein Schraubkanal, vorzugsweise am oberen Rand des Rahmens, in den eine Klemmschiene zur Fixierung der äußeren Glasscheibe verschraubt werden kann. In diesem Schraubkanal können auch die Lüftungskappen montiert werden.
Zu c) und e): Die Glasscheiben können aus anderen lichtdurchlässigen Materialien bestehen, beispielsweise aus Kunststoff. Die Auflage/Befestigung/ Konfektionierung der Glasscheiben im/am Kollektor kann unmittelbar oder mittelbar (mit Hilfe von Zwischenschienen, Klammern, Adaptern etc) am Rahmen erfolgen.
   Entsprechend lassen sich die Abstandhalter konstruktiv anpassen. Eine gute Lösung besteht darin, vier Abstandhalter, und zwar je einen an jedem der vier Ränder/Kanten der Glasscheiben, vorzusehen. Die Abstandhalter ergänzen sich dann zu einem rechteckigen Rahmen und können endseitig, also in den Eckbereichen des Kollektors, aneinander anschließen. In einem oder mehreren der Eckbereiche kann vorzugsweise jeweils eine Öffnung ausgebildet werden, die den Raum zwischen den Glasscheiben mit dem übrigen Kollektor-Innenraum verbindet, wie nachstehend noch erläutert wird. Diese Öffnung(en) bilden strömungstechnisch die Verlängerung der Be-/Entlüftungskanäle an den Rahmenteilen des Solarkollektors, um die Luft auch zwischen die Glasscheiben zu leiten.
   Die Abstandhalter können Profischienen sein, die im Schnitt beispielsweise ein T-, U-,V-Profil oder ein L-Profil aufweisen.
Zu f) und g): Die Konstruktion von Absorberblech und Registerrohr ist für die Erfindung nicht wichtig und kann gemäß Stand der Technik erfolgen. Das gilt auch für die Verbindung des/der Registerrohr(e) mit einer Sammelleitung sowie die Verbindung von Registerrohren mit Registerrohren eines benachbarten Kollektors.
Zu h) und i): auch diese Merkmale entsprechen dem Stand der Technik und werden nicht näher beschrieben. Bezüglich der Registerrohre gilt, dass die Ebene gemeint ist, in der die Registerrohre (benachbarte Abschnitte der Registerrohre) eines Kollektors verlaufen.
Zu j): Die Lüftungskappen sind wesentliches Merkmal des neuen Kollektors. Sie sind so gestaltet, dass Luft von außen in den Kollektorraum strömen kann oder umgekehrt, und zwar so, dass der Rahmen nicht durchbohrt oder sonstwie geöffnet werden müsste.

Die Profilierung an der Innenseite der Kappen bildet die gewünschten Strömungskanäle. Die Luft tritt (in der Funktionsposition des Kollektors) unten am ersten Abschnitt in die Strömungskanäle ein und fließt entlang der Kanäle, also zwischen der Lüftungskappe und der Außenseite des Rahmens) nach oben (in Richtung auf den zweiten Abschnitt). Dort wird die Luft umgelenkt (um den oberen Rand des Kollektorrahmens herum) und strömt anschließend wieder nach unten, in das Kollektorinnere.

An einer anderen Lüftungskappe kann der Luftweg genau umgekehrt sein, um die Luft wieder aus dem Kollektor zu entfernen.

Der Strömungsweg entlang der Lüftungskappen wird, unabhängig davon, in welche Richtung die Luft strömt, Belüftungskanal, Strömungskanal oder Luftkanal genannt.

Wichtig ist, dass jeder dieser Strömungskanäle im Bereich der Lüftungsklappen in strömungstechnischer Verbindung mit dem Raum zwischen innerer und äußerer Glasscheibe steht. Dies erfolgt erfindungsgemäß dadurch, dass jedem Strömungskanal mindestens jeweils eine Öffnung zugeordnet ist und diese Öffnung zwischen den Scheiben liegt, also im Bereich der Abstandsmittel, an denen die Scheiben gelagert sind.

Mit anderen Worten: Anders als bei der oben erwähnten Doppelglasscheibe ist es erfindungsgemäß wichtig, dass der Raum zwischen den Glasscheiben an mindestens zwei Stellen für Luft durchlässig ist.

Auf diese Weise wird eine Art Zwangsbelüftung für den Scheibenzwischenraum erreicht. Umgebungsluft kann in die genannten Abschnitte im Kollektorinnenraum strömen, diese durchströmen und anschließend den Kollektor analog verlassen.

Mit Hilfe von Durchbrüchen an anderen Stellen im Kollektorinnenraum können zusätzliche Abschnitte des Kollektorinnenraums von Luft durchströmt werden, wenn dies gewünscht wird.

In allen Fällen wird die Luft auf dem Weg entlang der Lüftungskanäle an die Temperatur im Kollektorinnenraum angepasst, meist also erwärmt.

### Allgemein gilt:

Die beschriebene Be- und Entlüftung wird durch eine Art Labyrinthsystem (mehrere Umlenkungen der Strömungsrichtung der Luft) erreicht und die Luft damit durch den Scheibenzwischenraum und gegebenenfalls zusätzliche Abschnitte des Innenraums des Kollektors geleitet.

Die Belüftungspositionen können sowohl an den Kollektorenden, insbesondere an den Kollektorecken, aber auch an anderen Stellen des Rahmens gewählt werden, zum Beispiel in der Mitte der Rahmenteile.

Das Be- und Entlüftungssystem besteht im Wesentlichen aus den Lüftungsklappen (mindestens zwei, um eine Durchströmung/Zirkulation zu erreichen) und einer bestimmten Anzahl von Öffnungen an unterschiedlichen Positionen im oder am Rahmen. Der Begriff Rahmen umfasst insoweit alle Teile, die unmittelbar oder mittelbar mit dem Rahmen verbunden sind oder mit dem Rahmen verbunden werden.

Die beschriebenen Merkmale der Erfindung können einzeln oder in beliebigen Kombinationen realisiert werden, soweit dies technisch sinnvoll ist. Dies gilt auch für die Merkmalen der Unteransprüche, die folgende Optionen umfassen:
- Die Profilierung der Innenseite des ersten Abschnitts, des zweiten Abschnitts oder beider Abschnitte der Lüftungskappen weisen jeweils mindestens eine Nut oder mindestens einen Steg auf.
   Auf diese Weise werden ein oder mehrere Strömungskanäle gebildet. Es kann ein geriffeltes Profil mit parallel verlaufenden Nuten/Stegen gebildet werden, wodurch eine gerichtete Strömung entsteht.
   Eine Profilierung mit Noppen ergibt ein Strömungsbild mit ungerichteter Luftströmung um die Noppen herum.
   Beide Ausführungsformen gelten insbesondere für die Profilierung am ersten Abschnitt der Kappe, der den Kollektor-Rahmen außen abdeckt.
   Am zweiten Abschnitt genügt dann beispielsweise ein vorstehender Steg (eine Rippe, ein Noppen etc.), um sicherzustellen, dass dieser Abschnitt mit etwas Abstand zum oberen Rand des Kollektor-Rahmens verläuft und damit ein Spalt für die Luft gebildet wird, die entlang des ersten Abschnitts anströmt oder über den ersten Abschnitt wieder ausströmt.
   Wichtig ist, dass Lufträume zwischen beiden Abschnitten einer Kappe und den benachbarten Bauteilen des Kollektors bestehen und diese Lufträume strömungstechnisch verbunden sind.
- Nut und/oder Steg des ersten Abschnitts verlaufen im Wesentlichen senkrecht zum Boden.
- Die Nut beziehungsweise der Steg des ersten Abschnitts erstrecken sich über die gesamte Innenseite des Abschnitts. Technisch genügt es jedoch, dass die Profilierung bis zum oberen Rand des Rahmens verläuft (wenn die Kappe auf dem Rahmen positioniert ist) um dann unterhalb des zweiten Abschnitts weiterzuströmen.

- Es ist auch möglich, die Profilierung der Innenseite des ersten Abschnitts, des zweiten Abschnitts oder beider Abschnitte mit mehrere diskreten, im Abstand zueinander angeordnete Noppen auszubilden. In diesem Fall wird eine turbulente Strömung erzeugt.
- Die Profilierung der Innenseite des zweiten Abschnitts weist mindestens einen Noppen oder einen Steg auf, der in Richtung auf den Boden vorsteht. Dies wurde vorstehend bereits angesprochen.
- Die Profilierung der Innenseite des zweiten Abschnitts weist mindestens einen Noppen oder einen Steg auf, der auf der oberen Stirnfläche des Rahmens aufliegt. Der Luftspalt wird dabei direkt zwischen dem Rahmen und zweiten Abschnitt der Lüftungskappe gebildet.
- Die Profilierung der Innenseite des zweiten Abschnitts weist mindestens eine Leiste auf, die die Innenseite des zweiten Abschnitts seitlich überragt. Diese Leiste kann zur Verrastung/Befestigung im Rahmen beziehungsweise zur Verrastung/Befestigung mit benachbarten Leisten dienen, beispielsweise solchen Leisten, die die obere Glasscheibe am Rahmen festhalten.
- Die Abstandmittel zwischen innerer Glasscheibe und äußerer Glasscheibe werden von Profilschienen gebildet, die parallel zu den Rändern der Glasscheiben verlaufen und im Kontaktbereich zu den Glasscheiben Dichtungen aufweisen.

Die Abstandhalter verlaufen dann etwa da, wo bei einer Isolierglasscheibe der Scheibenrand verläuft. Die Dichtungen stellen sicher, dass keine unkontrollierte Konvektion im Kollektor-Innenraum auftritt.
- Die Öffnung in den Abstandsmitteln wird am besten durch einen kleinen Abstand (1-10mm, insbesondere 1-5mm) benachbarter Profilschienen oder durch eine Öffnung (gleiche Dimensionierung wie vor) in einer Profilschiene gebildet wird.
   Die zuerst genannte Variante hat den Vorteil, dass kein separater Bearbeitungsschritt der Profilschiene notwendig ist. Sie ist nur kürzer als die korrespondierende Längsseite des Glases.
   Benachbarte Profilschienen sind Profilschienen, die in Umfangsrichtung der Glasscheiben aneinander anschließen. Insbesondere im Eckbereich lassen sich die genannten Öffnungen leicht durch einen Abstand zwischen zwei Profilschienen bilden.
   Es sollten mindestens zwei Öffnungen, im Abstand zueinander, vorhanden sein. Eine gute Lösung sind Öffnungen an gegenüberliegenden Bereichen der beiden Scheiben, insbesondere an gegenüberliegenden Eckbereichen
- Der Belüftungskanal kann über mindestens einen Durchgang im Auflagebereich der inneren Glasscheibe eine weitere strömungstechnische Verbindung zu einem Abschnitt des Kollektorraums erhalten, der zwischen innerer Glasscheibe und Boden liegt. Insoweit lassen sich auch andere Bereiche im Kollektor-Innenraum zwangsbelüften.
- Nach einer Ausführungsform liegt die innere Glasscheibe randseitig auf Leisten auf, die vom Rahmen abstehen. Diese Leisten können mittelbar oder unmittelbar mit anderen Rahmenteilen verbunden sein.
- Die Durchbrüche können wiederum in der Leiste selbst oder durch einen Abstand benachbarter Leisten gebildet werden. Insoweit gilt konstruktiv das gleiche wie bei den Öffnungen zum Scheibenzwischenraum.
- Nach einer Variante weist der Rahmen in axialer Verlängerung einer Leiste ein Loch auf, über das Feuchtigkeit aus dem Kollektorraum nach außen weggeführt werden kann. Das Loch hat also die Funktion eines Entwässerungslochs und wird bei schräg aufgestelltem Kollektor vorzugsweise am "unteren", tiefer liegenden Ende des Kollektors angeordnet.
- Schließlich kann die äußere Glasscheibe auf ihrer Außenseite von Klemmschienen gehalten werden, die am Rahmen befestigt sind und gemeinsam mit den Lüftungskappen die äußere Glasscheibe randseitig begrenzen. Vorzugsweise sind die Lüftungskappen und Klemmschienen so gestaltet, dass sie zueinander fluchten.

Weitere Merkmale der Erfindung ergeben sich aus dem Merkmalen der Unteransprüche sowie den sonstigen Anmeldungsunterlagen.

Die Erfindung wird nachstehend anhand eines Ausführungsbeispiels näher erläutert. Dabei zeigen - in jeweils schematisierter Darstellen- :
- Fig. 1:: einen Längsschnitt durch den Eckbereich eines Solar-Kollektors
- Fig. 2a:: eine 3-dimensionale erste Ansicht des teilweise aufgeschnitten Eckbereichs gemäß Fig. 1
- Fig. 2b:: eine 3-dimensionale erste Ansicht des teilweise aufgeschnitten Eckbereichs gemäß Fig. 1
- Fig. 3:: eine Aufsicht in den teilweise aufgeschnittenen Eckbereich gemäß Fig. 1,2
- Fig. 4:: eine 3-dimensionale Ansicht in eine Lüftungskappe für den Eckbereich des Solar-Kollektors gemäß Fig. 1
- Fig. 5:: eine Gesamtansicht des Solarkollektors

In den Figuren sind gleiche Bauteile und Bauteile mit gleicher Funktion mit gleichen Bezugszeichen dargestellt.

Die Figuren zeigen einen Solarkollektor mit folgenden Merkmalen:
Einem rechteckigen Boden 10; einem am Rand des Bodens 10 senkrecht vom Boden 10 abstehenden, umlaufenden Rahmen 12 mit vier Wandabschnitten W1 bis W4 und vier Eckbereichen E1 bis E4; einer äußeren rechteckigen Glasscheibe 14, die an einem, dem Boden 10 gegenüberliegenden oberen Ende 12E des Rahmens 12 am Rahmen 12 befestigt ist; einer inneren rechteckigen Glasscheibe 16, die mit Abstand zur äußeren Glasscheibe 14 zwischen äußerer Glasscheibe 14 und Boden 10 am Rahmen 12 befestigt ist, wobei der Abstand zwischen innerer und äußerer Glasscheibe 16, 14 und damit ein Raum R zwischen innerer und äußerer Glasscheibe 16, 14 durch Abstandsmittel 18 in Form von Profilleisten definiert ist, die die innere und äußere Glasscheibe 16, 14 in ihren Randbereichen 16R, 14R verbinden; einem Absorberblech 20, das mit Abstand zur inneren Glasscheibe 16 zwischen innerer Glasscheibe 16 und Boden 10 angeordnet ist; mindestens einem Registerrohr 22 das mit Abstand zum Boden 10 zwischen Absorberblech 20 und Boden 10 angeordnet ist, wobei Boden 10, Rahmen 12 und äußere Glasscheibe 14 einen quaderförmigen Kollektorraum KR begrenzen und Boden 10, äußere Glasscheibe 14, innere Glasscheibe 16, Absorberblech 20 und Registerrohr 22 im wesentlichen parallel zueinander verlaufen; sowie mindestens zwei, im Abstand zueinander angeordnete Lüftungsklappen 30 mit jeweils folgenden Merkmalen:
   - einem ersten Abschnitt 32, der mit einer Innenseite 32I gegen eine Außenseite 12A des Rahmens 12 am oberen Ende 12E des Rahmens 12 liegt, und
   - einem rechtwinklig zum ersten Abschnitt 32 verlaufenden zweiten Abschnitt 34, der mit einer Innenseite 34I eine endseitige obere Stirnfläche 12S des Rahmens 12 überdeckt, wobei
   - die Innenseiten 321, 341 der beiden Abschnitte 32, 34 jeweils eine solche Profilierung 32A, 32P, 34P aufweisen, dass entlang der Innenseiten 321, 34I mindestens ein durchgehender Belüftungskanal BK gebildet wird, der von Außen in den Kollektorraum KR führt und
   - der Belüftungskanal BK über mindestens eine Öffnung 24 in den Abstandsmitteln 18 in strömungstechnischer Verbindung mit dem Raum R zwischen innerer und äußerer Glasscheibe 16, 14 steht.

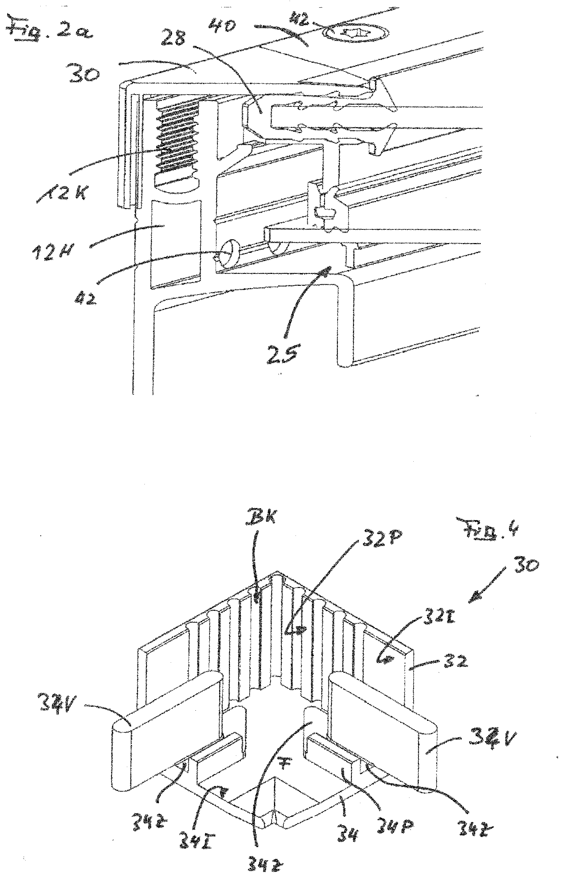

Auf diese Weise ergibt sich folgende Be- und Entlüftungsmöglichkeit für den Raum R zwischen den Glasscheiben 14, 16: Luft wird von außen und von unten entlang der Belüftungskanäle BK angesaugt, wobei diese Belüftungskanäle BK beim Ausführungsbeispiel gemäß Figur 4 durch lineare Nuten gebildet werden, die vom freien Ende des ersten Abschnitts 32 bis zum zweiten Abschnitt 34 verlaufen. Analog werden zwischen den Nuten Stege gebildet.

Die Luft strömt also entlang der Belüftungskanäle BK zwischen dem Kappenabschnitt 32 und dem Rahmen 12 von unten nach oben in einen Freiraum F, der durch die Profilierung am zweiten Abschnitt 34 gebildet wird. Dieser Teil der Profilierung ist durch zwei verdickte (nach innen vorstehenden) Stege/Zonen 34Z realisiert, die von der Innenseite 34I des Abschnitts 34 abstehen, und zwar in der Funktionsposition nach unten in Richtung auf den Boden 10 des Kollektors. Im Montagezustand liegt die Zone 34Z der Lüftungskappe auf der oberen Stirnfläche 12S des Rahmens auf.

Entsprechend kann die über die Belüftungskanäle BK angesaugte Luft um die obere Stirnfläche 12S des Kollektorrahmens 12 herum in den Raum F strömen, der quasi den Belüftungskanal BK fortsetzt.

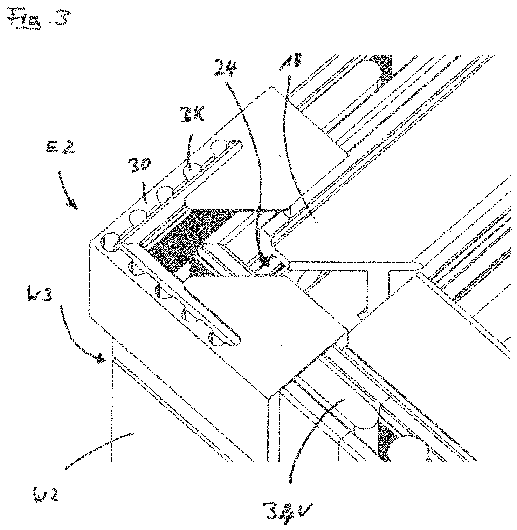

Figur 3 ist zu entnehmen, dass der Belüftungskanal BK in eine Öffnung 24 übergeht, die im Eckbereich E2 von zwei Profilschienen 18 ausgebildet ist. Damit ergibt sich eine strömungstechnische Verbindung von Lüftungskanal BK in den Raum R zwischen den Glasscheiben 14, 16.

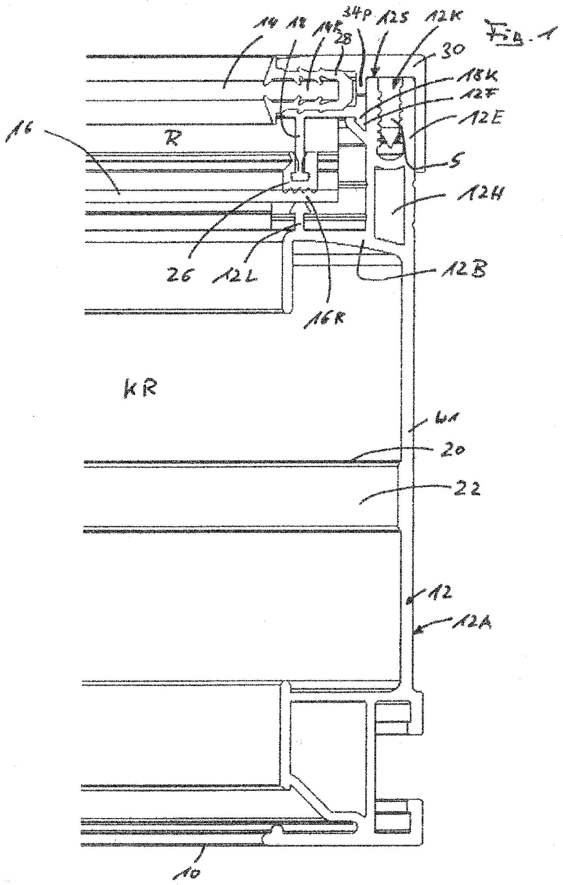

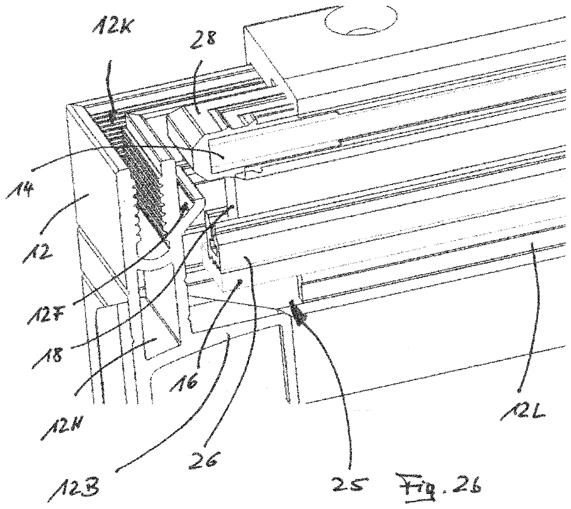

Die Konfektionierung der Glasscheiben 14, 16 lässt sich am besten den Figuren 1 und 2 entnehmen.

Im Abstand zur Stirnfläche 12S verläuft vom Rahmen 12 ein Arm 12B nach Innen (in den Kollektor-Innenraum KR), an dessen inneren Ende ein Auflager 12L nach oben absteht, auf dem die zweite Glasscheibe 16 liegt. Auf der zweiten Glasscheibe 16 liegt eine Dichtung 26, die ein unteres Ende des Abstandhalters 18 umgreift, der im Schnitt eine T-Form aufweist. In der Montageposition weist der horizontale (obere) T-Schenkel an einem Ende eine Abkröpfung 18K aufweist, die formschlüssig in eine Führungsnut 12F passt, die im Rahmenprofil 12 ausgebildet ist, und zwar an der Innenseite eines doppelwandigen oberen Abschnitts 12E.

Auf dem horizontalen Abschnitt des Abstandhalters 18 liegt die erste Glasscheibe 14 auf, wobei der Rand der Glasscheibe 14 von einer Dichtung 28 umhüllt ist.

Figur 1 zeigt das doppelwandige obere Ende 12E des Rahmens 12 unter Ausbildung einer Hohlkammer 12H und eines Schraubkanals 12K, in dem eine L-förmige Leiste 40 verschraubt werden kann (Schraube 42), die die obere Glasscheibe 14 randseitig überdeckt und fixiert.

In Figur 1 ist eine Befestigungsschraube S schematisch dargestellt.

Die Leiste 40 verläuft fluchtend zu der Lüftungskappe 30. Bei diesem Beispiel ist in jeder der vier Eckbereiche des Kollektors eine Lüftungskappe 30 angeordnet.

Wie die Figuren 3 und 4 zeigen, erfolgt die Fixierung der Belüftungskappen 30 über Verriegelursgsstege 34V, die in den Schraubkanal 12K eingeklemmt werden und weitere Stege 34P, die innenseitig am Rahmen 12 anliegen, wenn der Kollektor komplett konfektioniert ist. Der Abschnitt jedes Verriegelungssteges 34V, der den Abschnitt 34 überragt, wird von der Leiste 40 überdeckt und gesichert.

Die Auflager 12L weisen analog zu den Abstandshaltern 18 im Eckbereich einen Abstand zueinander auf (Fig. 2a), wodurch jeweils ein Durchbruch 25 gebildet wird, so dass die Luft, die über die Belüftungskanäle BK in den Kollektorraum KR einströmt, auch in unterer Abschnitte des KollektorInnenraums KR eindringen kann und auf analoge Weise aus dem Kollektorraum KR entfernt wird.

Figur 2 zeigt Öffnungen 42 im Bereich der Innenwand des Rahmens 12 an der Stelle, an der der Rahmen 12 als Hohlkörper 12H ausgebildet ist, wobei diese Öffnungen 42 dazu dienen, etwaige Feuchtigkeit aus dem Kollektorraum KR wegzuführen.

Fig. 5 ist eine Gesamtansicht eines aus 3 Abschnitten A1, A1 und A3 bestehenden Solarthermie-Kollektor. Jeder dieser Abschnitte A1, A2, A3 ist analog den vorstehend genannten Merkmalen konstruiert. Beispielsweise wird der Abschnitt A1 von vier Rahmenabschnitten W1, W2, W3 und W4 gebildet, die den Abschnitt A1 gemeinsam mit einem in Fig. 5 nicht erkennbaren Boden und der oberen Glasscheibe 14 umfangsseitig definieren.

Das Besondere an diesem Kollektor ist, dass die Wand W4 gleichzeitig die Wand W2 des benachbarten Abschnitts A2 bildet, das heißt, die Wand W4 von A1 beziehungsweise W2 von A2 bilden einen gemeinsamen Mittelsteg des Gesamtkollektors gemäß Figur 5. Entsprechend sind beispielsweise die Schraubkanäle 12K, Arme 12B und Führungsnuten 12F auf beiden Seiten des Mittelstegs ausgebildet, um auf beiden Seiten dieses Rahmenteils die entsprechenden Bauelemente wie Glasscheiben, Absorber etc. aufzunehmen. Insgesamt wird die Gesamtkonstruktion dadurch schmaler und konstruktiv einfacher.

## Patentansprüche

1. Solarkollektor mit folgenden Merkmalen:
a) einem rechteckigen Boden (10),
b) einem am Rand des Bodens (10) senkrecht vom Boden (10) abstehenden, umlaufenden Rahmen (12) mit vier Wandabschnitten (W1-W4) und vier Eckbereichen (E1-E4),
c) einer äußeren rechteckigen Glasscheibe (14), die an einem dem Boden (10) gegenüberliegenden oberen Ende des Rahmens (12) am Rahmen (12) befestigt ist ,
d) einer inneren rechteckigen Glasscheibe (16), die mit Abstand zur äußeren Glasscheibe (14) zwischen äußerer Glasscheibe (14) und Boden (10) am Rahmen (12) befestigt ist, wobei
e) der Abstand zwischen innerer und äußerer Glasscheibe (16, 14) und damit ein Raum (R) zwischen innerer und äußerer Glasscheibe (16, 14) durch Abstandsmitteln (18) definiert ist, die die innere und äußere Glasscheibe (16, 14) in ihren Randbereichen (16R, 14R) verbinden,
f) einem Absorberblech (20), das mit Abstand zur inneren Glasscheibe (16) zwischen innerer Glasscheibe (16) und Boden (10) angeordneten ist,
g) mindestens einem Registerrohr (22), das mit Abstand zum Boden (10) zwischen Absorberblech (20) und Boden (10) angeordnet ist, wobei
h) Boden (10), Rahmen (12) und äußere Glasscheibe (14) einen quaderförmigen Kollektorraum (KR) begrenzen, und
i) Boden (10), äußere Glasscheibe (14), innere Glasscheibe (16), Absorberblech (20) und Registerrohr (22) im Wesentlichen parallel zueinander verlaufen,
**dadurch gekennzeichnet, dass** der Solarkollektor zusätzlich folgende Merkmale aufweist:
j) mindestens zwei, im Abstand zueinander angeordnete Lüftungskappen (30) mit jeweils folgenden Merkmalen:
j1) einem ersten Abschnitt (32), der mit einer Innenseite (321) gegen eine Außenseite (12A) des Rahmens (12) am oberen Ende (12E) des Rahmens (12) anliegt, und
j2) einem rechtwinklig zum ersten Abschnitt (32) verlaufenden zweiten Abschnitt (34), der mit einer Innenseite (341) eine endseitige obere Stirnfläche (12S) des Rahmens (12) überdeckt, wobei
i3) die Innenseiten (321, 34I) der beiden Abschnitte (32, 34) jeweils eine solche Profilierung (32P, 34P, 34Z) aufweisen, dass entlang der Innenseiten (32I, 34I) mindestens ein durchgehender Belüftungskanal (BK) gebildet wird, der von außen in den Kollektorraum (KR) führt und
j4) der Belüftungskanal (BK) über mindestens eine Öffnung (24) in den Abstandsmitteln (18) in strömungstechnischer Verbindung mit dem Raum (R) zwischen innerer und äußerer Glasscheibe (16, 14) steht.

2. Solarkollektor nach Anspruch 1, bei dem die Profilierung (32P, 34P, 34Z) der Innenseite (321) des ersten Abschnitts (32), des zweiten Abschnitts (34) oder beider Abschnitte (32, 34) jeweils mindestens eine Nut oder mindestens einen Steg aufweisen.

3. Solarkollektor nach Anspruch 2, bei dem die Nut beziehungsweise der Steg des ersten Abschnitts (32) im Wesentlichen senkrecht zum Boden (10) verlaufen.

4. Solarkollektor nach Anspruch 3, bei dem die Nut beziehungsweise der Steg des ersten Abschnitts (32) sich über die gesamte Innenseite (321) erstrecken.

5. Solarkollektor nach Anspruch 1, bei dem die Profilierung (32P, 34P, 34Z) der Innenseite (32I, 34I) des ersten Abschnitts (32), des zweiten Abschnitts (34) oder beider Abschnitte (32, 34) mehrere diskrete, im Abstand zueinander angeordnete Noppen aufweist.

6. Solarkollektor nach Anspruch 1, bei dem die Profilierung (34P, 34Z) der Innenseite (341) des zweiten Abschnitts (34) mindestens einen Noppen oder einen Steg aufweist, der in Richtung auf den Boden (10) vorsteht.

7. Solarkollektor nach Anspruch 1, bei dem die Profilierung (34P, 34Z) der Innenseite (341) des zweiten Abschnitts (34) mindestens einen Noppen oder einen Steg (34Z) aufweist, der auf der oberen Stirnfläche (12S) des Rahmens (12) aufliegt.

8. Solarkollektor nach Anspruch 1, bei dem die Profilierung (34P) der Innenseite (341) des zweiten Abschnitts (34) mindestens eine Leiste (34V) aufweist, die die Innenseite (341) des zweiten Abschnitts (34) seitlich überragt.

9. Solarkollektor nach Anspruch 1, bei dem die Abstandmittel (18) zwischen innerer Glasscheibe (16) und äußerer Glasscheibe (14) von Profilschienen gebildet werden, die parallel zu den Rändern der Glasscheiben (14, 16) verlaufen und im Kontaktbereich zu den Glasscheiben (14, 16) Dichtungen (26, 28) aufweisen.

10. Solarkollektor nach Anspruch 9, bei dem die Öffnung (24) in den Abstandsmitteln (18) durch einen Abstand benachbarter Profilschienen (18) oder in einer Profilschiene (18) gebildet wird.

11. Solarkollektor nach Anspruch 1, bei dem der Belüftungskanal (BK) über mindestens einen Durchgang im Auflagebereich für die innere Glasscheibe (16) eine strömungstechnische Verbindung zu einem Abschnitt des Kollektorraums (KR) zwischen innerer Glasscheibe (16) und Boden (10) hat.

12. Solarkollektor nach Anspruch 1, bei dem die innere Glasscheibe (16) randseitig auf Armen (12B, 12L) aufliegt, die vom Rahmen (12) abstehen.

13. Solarkollektor nach Anspruch 12, bei dem der Durchbruch in einem Arm (12B, 12L) oder durch einen Abstand benachbarter Arme (12B, 12L) gebildet wird.

14. Solarkollektor nach Anspruch 12, bei dem der Rahmen (12) in axialer Verlängerung einer Leiste ein Loch (42) aufweist, über das Feuchtigkeit aus dem Kollektorraum (KR) nach außen weggeführt werden kann.

15. Solarkollektor nach Anspruch 1, bei dem die äußere Glasscheibe (14) auf ihrer Außenseite von Klemmschienen (40) gehalten wird, die am Rahmen (12) befestigt sind und gemeinsam mit den Lüftungskappen (30) die äußere Glasscheibe (14) randseitig begrenzen.

## Claims

1. A solar collector, comprising
a) a rectangular bottom (10),
b) a frame (12), extending from an outer periphery of the bottom (10) and perpendicular to said bottom (10), which frame (12) comprises four wall sections (W1-W4) and four comer sections (E1-E4),
c) an outer, rectangular glass pane (14), which is fastened to said frame (12) at an upper end of said frame (12), which upper end being arranged opposite to said bottom (10),
d) an inner, rectangular glass pane (16), which is fastened to said frame (12) at a distance to the outer glass pane (14) between outer glass pane (14) and bottom (10), wherein
e) said distance between inner and outer glass panes (16, 14) and thus a space (R) between inner and outer glass panes (16,14) is defined by spacers (18), connecting said inner and outer glass panes (16, 14) at their respective peripheral areas (16R, 14R),
f) an absorber sheet (20), arranged at a distance to said inner glass pane (16) between said inner glass pane (16) and said bottom (10),
g) at least one riser (22) arranged at distance to said bottom (10) between said absorber sheet (20) und said bottom (10), wherein
h) said bottom (10), said frame (12) and said outer glass pane (14) define a box-shaped collector space (KR), and
i) the bottom (10), the outer glass pane (14), the inner glass pane (16), the absorber sheet (20) and the risers (22) extend predominantly parallel to each other,
**characterized in that** the solar collector further comprises:
j) at least two ventilation caps (30) arranged at a distance to each other, and each cap comprising:
j 1) a first section (32), abutting with an inner side (32I) against an outer side (32A) of the frame (12) at the upper end (12E) of said frame (12),
j2) a second section (34), extending orthogonally to the first section (32), overlapping with an inner side (34I) a terminal upper front face (12S) of the frame (12), wherein
j3) the inner sides (32I, 34I) of both first and second sections (32, 34) each display a pattern (32P, 34P, 34Z), providing at least one continuous ventilation channel (BK) along said inner sides (32L, 34L), which ventilation channel (BK) leads from an outside into said collector space (KR), and
j4) said ventilation channel (BK) is fluidly connected via at least one opening (24) . in said spacers (18) to said space (R) between the inner and outer glass panes (16, 14).

2. The solar collector according to claim 1, wherein the pattern (32P, 34P, 34Z) of the inner side (321) of the first section (32), of the second section (34) or of both sections (32, 34) of said ventilation caps (30) comprises at least one notch or at least one ridge.

3. The solar collector according to claim 2, wherein the notch or the ridge of the first section (32) of the ventilation caps (30) predominantly extends perpendicular to the bottom (10).

4. The solar collector according to claim 2, wherein the notch or the ridge of the first section (32) of the ventilation cap (30) extends completely along the inner side (32I) of the first section (32).

5. The solar collector according to claim 1, wherein the pattern (32P, 34P, 34Z) of the inner side (32I, 34I) of the first section (32), of the second section (34) or of both sections (32,34) of said ventilation caps (30) comprises a multiplicity of discrete knobs, arranged at a distance to each other.

6. The solar collector according to claim 1, wherein the pattern (34P, 34Z) of the inner side (34I) of the second section (34) of said ventilation caps (30) comprises at least one knob or at least one ridge, protruding towards the bottom (10).

7. The solar collector according to claim 1, wherein the pattern (34P, 34Z) of the inner side (341) of the second section (34) of said ventilation caps (30) comprises at least one knob or at least one ridge, resting on the terminal upper front face (12S) of the frame (12).

8. The solar collector according to claim 1, wherein the pattern (34P) of the inner side (34I) of the second section (34) of said ventilation caps (30) comprises at least one strip (34V), which projects above the inner side (34I) of the second section (34).

9. The solar collector according to claim 1, wherein the spacers (18) between the inner glass pane (16) and the outer glass pane (14) are provided by profiled bars, which extend parallel to outer rims of the glass panes (14, 16), featuring gaskets (26,28) in a contact area to said glass panes (14, 16).

10. The solar collector according to claim 9, wherein the opening (24) in said spacers (18) is provided by a distance between adjacent profiled bars (18) or within a profiled bar respectively.

11. The solar collector according to claim 1, wherein the ventilation channel (BK) has a fluidic connection to a section of the collector space (KR) between the inner glass pane (16) and the bottom (10), which fluidic connection being provided by at least one passage in a resting area for said inner glass pane (16).

12. The solar collector of claim 1, wherein the inner glass pane (16) rests with its outer rim on arms (12B, 12L), which protrude from said frame (12).

13. The solar collector according to claim 12, wherein the opening (24) is provided within one arm (12B, 12L) or by a distance between adjacent arms (12B, 12L).

14. The solar collector according to claim 1, wherein the frame (12) provides a hole (42) in an axial extension of a strip (34V), via which humidity can escape from the collector space (KR) towards outside.

15. The solar collector according to claim 1, wherein the outer glass pane (14) is hold at its outer side by clamps (40), which are fixed to the frame (12) and which limit, together with the ventilation caps (30) ,the outer glass pane (14) at its periphery.

## Revendications

1. Capteur solaire ayant les caractéristiques suivantes :
a) un fond rectangulaire (10),
b) un cadre (12) périphérique en saillie sur le bord du fond (10) perpendiculairement au fond (10), comprenant quatre tronçons de paroi (W1 - W4) et quatre parties angulaires (E1 - E4),
c) une vitre en verre (14) rectangulaire extérieure qui est fixée sur le cadre (12), à une extrémité supérieure du cadre (12) opposée au fond (10),
d) une vitre en verre rectangulaire intérieure (16) qui est fixée sur le cadre (12) à distance de la vitre en verre extérieure (14), entre la vitre en verre extérieure (14) et le fond (10),
e) la distance entre les vitres en verre intérieure et extérieure (16, 14), et ainsi un espace (R) entre les vitres en verre intérieure et extérieure (16, 14), est défini (e) par des écarteurs (18) qui relient les vitres en verre intérieure et extérieure (16, 14) dans leurs bords (16R, 14R),
f) une tôle absorbante (20) qui est disposée à distance par rapport à la vitre en verre intérieure (16), entre la vitre en verre intérieure (16) et le fond (10),
g) au moins un tube de registre (22) qui est disposé à distance du fond (10), entre la tôle absorbante (20) et le fond (10), dans lequel
h) le fond (10), le cadre (12) et la vitre en verre extérieure (14) délimitent un espace collecteur (KR) parallélépipédique, et
i) le fond (10), la vitre en verre extérieure (14), la vitre en verre intérieure (16), la tôle absorbante (20) et le tube de registre (22) sont essentiellement parallèles l'une à l'autre,
**caractérisé en ce que** le capteur solaire présente en outre les caractéristiques suivantes :
j) au moins deux bouchons d'aération (30) disposés à distance l'un de l'autre respectivement avec les caractéristiques suivantes:
j1) un premier tronçon (32) qui repose, par un côté intérieur (321) contre un côté extérieur (12A) du cadre (12) sur l'extrémité supérieure (12E) du cadre (12), et
j2) un second tronçon (34) en angle droit par rapport au premier tronçon (32) qui, avec un côté intérieur (34I), couvre une face avant (12S) supérieure à l'extrémité du cadre (12), dans lequel
j3) les côtés intérieurs (321, 341) des deux tronçons (32, 34) présentent respectivement un profilé (32P, 34P, 34Z) tel que le long des côtés intérieurs (32I, 34I), au moins un canal d'aération traversant (BK) est formé qui part de l'extérieur vers l'intérieur de l'espace collecteur (KR) et
j4) le canal d'aération (BK), par le biais d'au moins une ouverture (24) dans les écarteurs (18), est en liaison d'écoulement avec l'espace (R) entre les vitres en verre intérieure et extérieure (16, 14).

2. Capteur solaire selon la revendication 1, dans lequel le profilé (32P, 34P, 34Z) du côté intérieur (321) du premier tronçon (32), du second tronçon (34) ou des deux tronçons (32, 34) présente respectivement au moins une rainure ou au moins une traverse.

3. Capteur solaire selon la revendication 2, dans lequel la rainure, respectivement la traverse, du premier tronçon (32) sont essentiellement perpendiculaires au fond (10).

4. Capteur solaire selon la revendication 3, dans lequel la rainure, respectivement la traverse, du premier tronçon (32) s'étendent sur tout le côté intérieur (32I).

5. Capteur solaire selon la revendication 1, dans lequel le profilé (32P, 34P, 34Z) du côté intérieur (321, 341) du premier tronçon (32), du second tronçon (34) ou des deux tronçons (32, 34) présente plusieurs boucles discrètes disposées à distance l'une de l'autre.

6. Capteur solaire selon la revendication 1, dans lequel le profilé (34P, 34Z) du côté intérieur (34I) du second tronçon (34) présente au moins une boucle ou une traverse qui fait saillie en direction du fond (10).

7. Capteur solaire selon la revendication 1, dans lequel le profilé (34P, 34Z) du côté intérieur (341) du second tronçon (34) présente au moins une boucle ou une traverse (34Z) qui repose sur la face avant supérieure (12S) du cadre (12).

8. Capteur solaire selon la revendication 1, dans lequel le profilé (34P) du côté intérieur (34I) du second tronçon (34) présente au moins une baguette (34V) qui dépasse latéralement du côté intérieur (341) du second tronçon (34).

9. Capteur solaire selon la revendication 1, dans lequel les écarteurs (18) entre la vitre en verre intérieure (16) et la vitre en verre extérieure (14) sont formés par des rails profilés qui sont parallèles aux bord des vitres en verre (14, 16) et présentent des joints (26, 28) dans la zone de contact avec les vitres en verre (14, 16).

10. Capteur solaire selon la revendication 9, dans lequel l'ouverture (24) dans les écarteurs (18) est formée par un écart de rails profilés (18) voisins ou bien dans un rail profilé (18).

11. Capteur solaire selon la revendication 1, dans lequel le canal d'aération (BK) a une liaison d'écoulement vers un tronçon de l'espace de collecte (KR) entre la vitre en verre intérieure (16) et le fond (10), par au moins un passage au niveau de l'appui de la vitre en verre intérieure (16).

12. Capteur solaire selon la revendication 1, dans lequel la vitre en verre (16) intérieure repose par les bords sur des bras (12B, 12L) qui font saillie du cadre (12).

13. Capteur solaire selon la revendication 12, dans lequel la percée est formée dans un bras (12B, 12L) ou bien par un écart de bras (12B, 12L) voisins.

14. Capteur solaire selon la revendication 12, dans lequel le cadre (12) présente un trou (42) dans un prolongement axial d'une baguette, par lequel l'humidité peut être évacuée de l'espace de collecte (KR) vers l'extérieur.

15. Capteur solaire selon la revendication 1, dans lequel la vitre en verre extérieure (14) est maintenue sur son côté extérieur par des rails de serrage (40) qui sont fixés sur le cadre (12) et délimitent conjointement avec les bouchons d'aération (30) les bords de la vitre en verre extérieure (14).
